# EUROPÄISCHE PATENTSCHRIFT

(11) **EP 3 230 673 B1**
(45) Veröffentlichungstag und Bekanntmachung des Hinweises auf die Patenterteilung: **22.08.2018**
(21) Anmeldenummer: 15787485.0
(22) Anmeldetag: 09.10.2015
(51) Int. Cl.: F28F 13/00, H01M 10/625, H01M 10/6551, H01M 10/613

(54) **WÄRMEÜBERTRAGENDES AUSGLEICHSELEMENT SOWIE ELEKTRISCH BETREIBBARES FAHRZEUG MIT DERARTIGEM AUSGLEICHSELEMENT**
HEAT TRANSFERRING COMPENSATING ELEMENT AND ELECTRICALLY OPERATABLE VEHICLE HAVING SUCH A COMPENSATING ELEMENT
ÉLÉMENT DE COMPENSATION PAR TRANSFERT DE CHALEUR ET VÉHICULE À PROPULSION ÉLECTRIQUE POURVU D'UN TEL ÉLÉMENT DE COMPENSATION

(30) Priorität: 11.12.2014 DE 102014225508
(43) Veröffentlichungstag der Anmeldung: 18.10.2017
(73) Patentinhaber: Robert Bosch GmbH, 70442 Stuttgart (DE)
(72) Erfinder: MAIER, Simone, 72070 Tuebingen (DE); SCHUMACHER, Christoph, 72144 Dusslingen (DE); JABS, Volker, 72144 Dusslingen (DE)
(86) Internationale Anmeldenummer: PCT/EP2015/073342
(87) Internationale Veröffentlichungsnummer: WO 2016/091427

(56) Entgegenhaltungen:
- DE-U1-202010 007 905
- US-A1- 2009 145 793
- US-A1- 2014 084 953

## Beschreibung

### Stand der Technik

Die vorliegende Erfindung betrifft ein wärmeübertragendes Ausgleichselement zur Wärmeübertragung von einem ersten Bauteil zu einem zweiten Bauteil sowie ein mit Muskelkraft und/oder Motorkraft betreibbares Fahrzeug, insbesondere ein Elektrofahrrad, umfassend ein derartiges wärmeübertragendes Ausgleichselement.
In der Technik gibt es viele Bereiche oder Bauteile, welche aufgrund ihrer Funktion wärmer werden, als deren Umgebung. Häufig ist es notwendig, diese Wärme kontrolliert abzuführen. Hierzu sollte ein zuverlässiger Wärmestrom von der Wärmequelle über eine Systemgrenze nach außen gewährleistet sein. Grundsätzlich gibt es drei Möglichkeiten, Wärme zu übertragen, nämlich Konvektion, Wärmestrahlung und Wärmeleitung. In abgedichteten Systemen ist Konvektion häufig nicht möglich. Wärmestrahlung erzielt bei geringen Temperaturunterschieden keinen großen Beitrag zur Entwärmung. Die effektivste Kühlmethode ist üblicherweise Wärmeleitung von Bauteil zu Bauteil. Hierbei nimmt ein Wärmestrom stark ab, sobald ein Werkstoff mit schlechten Wärmeleiteigenschaften beteiligt ist oder eine Anlagefläche zwischen zwei Bauteilen minimal wird oder ein Luftspalt zwischen den Bauteilen vorhanden ist. Aufgrund von Toleranzen während des Herstellungsprozesses können derartige Luftspalte bei Bauteilen mehr oder weniger auftreten. Um trotzdem eine Wärmeleitung zwischen derartigen Bauteilen sicherzustellen, ist ein Ausgleichselement notwendig, welches den Luftspalt zwischen den Bauteilen überbrückt. Denkbar wären hier insbesondere elastische, z.B. gummiartige Elemente. Der Nachteil derartiger gummiartiger Werkstoffe ist jedoch deren schlechte Wärmeleiteigenschaft US-A-20140084953 offenbart ein Wärmeübertragendes Element gemäß dem Oberbegriff des Anspruchs 1.

### Offenbarung der Erfindung

Das erfindungsgemäße wärmeübertragende Ausgleichselement mit den Merkmalen des Anspruchs 1 weist demgegenüber den Vorteil auf, dass eine Wärmeübertragung von einem ersten zu einem zweiten Bauteil effektiv möglich ist. Hierdurch kann eine sichere Entwärmung von Bauteilen mittels Wärmeleitung ermöglicht werden. Erfindungsgemäß ist dabei ein erstes Wärmeleitelement mit einer ersten Kontaktfläche und einer zweiten Kontaktfläche sowie ein zweites Wärmeleitelement mit einer dritten Kontaktfläche und einer vierten Kontaktfläche vorgesehen. Die erste Kontaktfläche ist für einen Kontakt mit dem ersten Bauteil eingerichtet. Die vierte Kontaktfläche ist für einen Kontakt mit dem zweiten Bauteil eingerichtet. Die zweite Kontaktfläche ist für einen Kontakt mit dem zweiten Bauteil eingerichtet. Ferner sind die zweite Kontaktfläche des ersten Wärmeleitelements und die dritte Kontaktfläche des zweiten Wärmeleitelements miteinander in Kontakt. Dabei ist der Kontakt zwischen der zweiten und dritten Kontaktfläche derart ausgebildet, dass die zweite und dritte Kontaktfläche wenigstens eine schiefe Ebene an beiden Wärmeleitelementen aufweist, welche in einem Winkel zu einer Hauptachse des wärmeübertragenden Ausgleichselements angeordnet sind. Durch das Vorstehen der schiefen Ebene zwischen dem ersten und zweiten Wärmeleitelement können somit temperaturbedingte Abstandsänderungen zwischen dem ersten und zweiten Bauteil ausgeglichen werden und trotzdem ein ständiger Kontakt zwischen dem Ausgleichselement und dem ersten und zweiten Bauteil aufrechterhalten werden. Dadurch kann bei wärmebedingten Geometrieänderungen des ersten und zweiten Bauteils immer ein Kontakt zwischen beiden Bauteilen über das wärmeübertragende Ausgleichselement sichergestellt werden und somit Wärme vom ersten zum zweiten Bauteil oder umgekehrt übertragen werden. Damit ist eine effektive Entwärmung des wärmeren Bauteils hin zum kühleren Bauteil möglich. Das Ausgleichselement passt sich dabei immer entsprechend den Geometrieänderungen des ersten und zweiten Bauteils an und steht ständig mit beiden Bauteilen in Kontakt. Dabei ist das erfindungsgemäße Ausgleichselement sehr einfach und kostengünstig aufgebaut.

Die Unteransprüche zeigen bevorzugte Weiterbildungen der Erfindung.

Besonders bevorzugt sind die erste Kontaktfläche des ersten Wärmeleitelements und die vierte Kontaktfläche des zweiten Wärmeleitelements zueinander parallel.

Weiter bevorzugt umfasst das Ausgleichselement wenigstens ein Federelement, welches zwischen dem ersten und zweiten Wärmeleitelement angeordnet ist. Das Federelement ist dabei derart angeordnet, dass eine Vorspannung zwischen dem ersten und zweiten Wärmeleitelement vorhanden ist, so dass immer ein Kontakt an der schiefen Ebene zwischen der zweiten und vierten Kontaktfläche des Ausgleichselements sichergestellt ist.

Weiter bevorzugt ist eine Federkraft des Federelements zwischen dem ersten und zweiten Wärmeleitelement in Richtung parallel zu einer Hauptachse des Ausgleichselements gerichtet.

Vorzugsweise umfasst das wärmeübertragende Ausgleichselement ein erstes und ein zweites Federelement, welche zwischen dem ersten und zweiten Wärmeleitelement angeordnet sind. Dabei ist eine Federkraft des ersten Federelements in Richtung einer Federkraft des zweiten Federelements gerichtet, so dass das erste und zweite Wärmeleitelement zwischen den beiden Federelementen verspannt ist. Besonders bevorzugt weist das Ausgleichselement dabei genau zwei Federelemente auf.

Weiter bevorzugt ist das erste Federelement in einer ersten Tasche des ersten Wärmeleitelements angeordnet und zwischen einem Bodenbereich der ersten Tasche und einem Endbereich des zweiten Wärmeleitelements angeordnet. Darüber hinaus ist das zweite Federelement bevorzugt in einer zweiten Tasche des zweiten Wärmeleitelements angeordnet und zwischen einem Bodenbereich der zweiten Tasche und einem Endbereich des ersten Wärmeleitelements angeordnet. Hierdurch wird ein kompakter Aufbau des Ausgleichselements erreicht und insbesondere kann ein verliersicheres Halten des ersten und zweiten Wärmeleitelements erreicht werden. Dadurch sind keine weiteren Halteeinrichtungen zum Verbinden des ersten mit dem zweiten Wärmeleitelements notwendig.

Um besonders niedrige Herstellkosten aufzuweisen, ist vorzugsweise das erste Wärmeleitelement identisch zum zweiten Wärmeleitelement. Mit anderen Worten sind die geometrischen Formen des ersten und zweiten Wärmeleitelements gleich.

Um eine maximale Ausgleichsbewegung zwischen dem ersten und zweiten Wärmeleitelement zu begrenzen, weist das erste Wärmeleitelement vorzugsweise einen ersten Anschlag und das zweite Wärmeleitelement vorzugsweise einen zweiten Anschlag auf. Dadurch wird eine Verstellmöglichkeit des ersten Wärmeleitelements relativ zum zweiten Wärmeleitelement in einer Verstellrichtung begrenzt. Die Verstellrichtung ist vorzugsweise senkrecht zur Hauptachse des Ausgleichselements.

Besonders bevorzugt sind zwischen dem ersten und dem zweiten Wärmeleitelement eine Vielzahl von schiefen Ebenen ausgebildet. Ein Winkel der schiefen Ebene relativ zur Hauptachse des Ausgleichselements liegt vorzugsweise in einem Bereich von 30° bis 60° und beträgt besonders bevorzugt 45°.

Das erste und zweite Wärmeleitelement ist bevorzugt aus einem sehr guten wärmeleitenden Material hergestellt, insbesondere einem Metall, z.B. Aluminium.

Ferner betrifft die vorliegende Erfindung ein mit Muskelkraft und/oder Motorkraft betreibbares Fahrzeug, insbesondere ein Elektrofahrrad mit einem Akku und einem erfindungsgemäßen wärmeübertragenden Ausgleichselement. Das Ausgleichselement ist dabei vorzugsweise am Akku angeordnet. Dadurch kann Wärme, welche am Akku entsteht, über das wärmeübertragende Ausgleichselement vom Akku abgeführt werden. Dadurch kann eine Betriebstemperatur des Akkus auf einem vorbestimmten Niveau gehalten werden und somit eine optimale Energieversorgung des Fahrzeugs mit elektrischer Energie durch den Akku sichergestellt werden und ein optimiertes Wiederaufladen sichergestellt werden.

Weiter bevorzugt umfasst das Fahrzeug einen Rahmen, wobei der Akku am Rahmen angeordnet ist und das erfindungsgemäße wärmeübertragende Ausgleichselement zwischen dem Akku und dem Rahmen angeordnet ist. Dadurch kann der Rahmen des Fahrzeugs als Wärmesenke genutzt werden und Wärme, welche im Betrieb am Akku entsteht, kann über das wärmeübertragende Ausgleichselement in den Rahmen übertragen werden.

Besonders bevorzugt ist das erfindungsgemäße Ausgleichselement am Akku an einer Position angeordnet, an welcher an einer entsprechenden Innenwand des Akkus ein wärmeabgebendes Element angeordnet ist. Das wärmeabgebende Element kann beispielsweise eine Elektronik des Akkus sein und/oder Zellen des Akkus sein.

Für eine besonders gute Ausgleichsmöglichkeit des Ausgleichselements ist das Ausgleichselement vorzugsweise lose zwischen dem Akku und einem weiteren Bauteil des Fahrzeugs, insbesondere dem Rahmen, angeordnet.

Gemäß einer alternativen Ausgestaltung der Erfindung sind die erste Kontaktfläche des ersten Wärmeleitelements oder die dritte Kontaktfläche des zweiten Wärmeleitelements am Akku fixiert. Dadurch ist dann jeweils die nicht fixierte erste oder dritte Kontaktfläche vorgesehen, um die Ausgleichsbewegung des Ausgleichselements darzustellen.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische Schnittansicht eines wärmeübertragenden Ausgleichselements gemäß einem ersten Ausführungsbeispiel der Erfindung,
- Figur 2: eine schematische Schnittansicht des Ausgleichselements von Figur 1 in einem eingebauten Zustand,
- Figur 3: eine schematische Schnittansicht des Wärmeleitelements von Figur 2 in einem Ausgleichszustand,
- Figur 4: eine schematische Schnittansicht eines Ausgleichselements gemäß einem zweiten Ausführungsbeispiel der Erfindung, und
- Figur 5: eine schematische Ansicht eines Elektrofahrrads mit einem erfindungsgemäßen Ausgleichselement.

### Bevorzugte Ausführungsformen der Erfindung

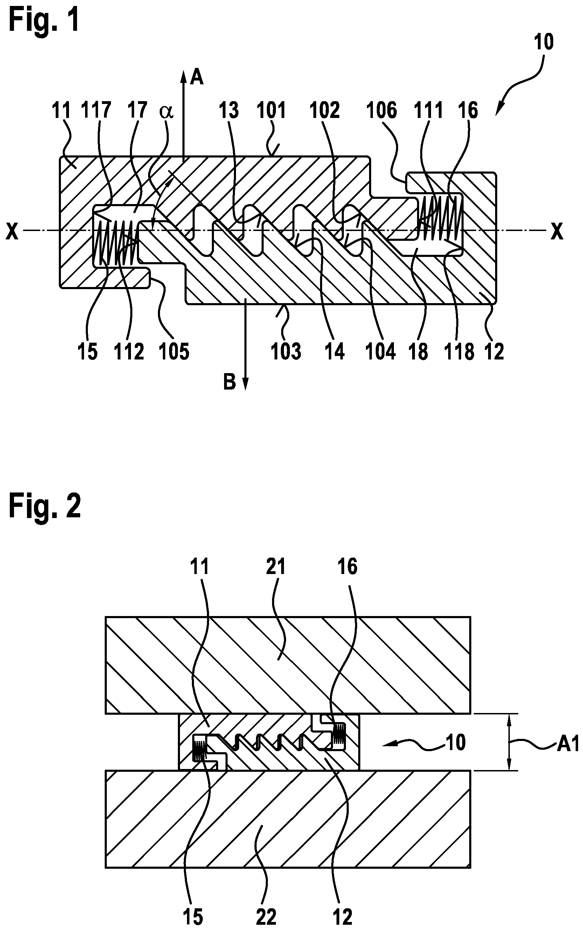

Nachfolgend wird unter Bezugnahme auf die Figuren 1 bis 3 ein wärmeübertragendes Ausgleichselement 10 gemäß einem ersten Ausführungsbeispiel der Erfindung im Detail beschrieben.

Das Ausgleichselement 10 umfasst ein erstes Wärmeübertragungselement 11 und ein zweiten Wärmeübertragungselement 12. Die beiden Wärmeübertragungselemente 11, 12 sind identisch aufgebaut und können seitlich ineinander eingeschoben werden.

Wie aus Figur 1 ersichtlich ist, weist das erste Wärmeübertragungselement 11 mehrere erste schiefe Ebenen 13 auf und das zweite Wärmeübertragungselement 12 weist mehrere zweite schiefe Ebenen 14 auf. Das erste Wärmeübertragungselement 11 weist eine erste Kontaktfläche 101 und eine zweite Kontaktfläche 102 auf. Die zweite Kontaktfläche 102 umfasst dabei schiefe Ebenen 13. In diesem Ausführungsbeispiel sind mehrere schiefe Ebenen 13 vorgesehen. Das zweite Wärmeübertragungselement 12 umfasst eine dritte Kontaktfläche 103 und eine vierte Kontaktfläche 104.

Wie aus Figur 1 ersichtlich ist, sind die zweite Kontaktfläche 102 des ersten Wärmeübertragungselements 11 und die vierte Kontaktfläche 104 des zweiten Wärmeübertragungselements 12 miteinander in Kontakt. Die erste Kontaktfläche 101 und die dritte Kontaktfläche 103 sind dabei parallel zueinander.

Ferner umfasst das Ausgleichselement 10 ein erstes Federelement 15 und ein zweites Federelement 16. Die beiden Federelemente 15, 16 stellen dabei eine Federkraft in Richtung einer Hauptachse X-X des Ausgleichselements 10 bereit.

Wie aus Figur 1 ersichtlich ist, ist das erste Federelement 15 in einer ersten Tasche 17 angeordnet und stützt sich an einem ersten Bodenbereich 117 des ersten Tasche 17 sowie einem Endbereich 112 des zweiten Wärmeübertragungselements ab. In gleicher Weise ist das zweite Federelement 16 in einer zweiten Tasche 18 angeordnet, wobei sich das zweite Federelement 16 zwischen einem zweiten Bodenbereich 118 der zweiten Tasche 18 und einem Endbereich 111 des ersten Wärmeübertragungselements 11 abstützt. Dadurch wird eine Vorspannung zwischen den beiden Wärmeübertragungselementen 11 erreicht, so dass diese in Richtung der Pfeile A und B eine Tendenz haben, sich voneinander wegzubewegen. Dadurch ist ein wärmebedingter Toleranzausgleich durch das Ausgleichselement 10 möglich.

Damit das Ausgleichselement nicht aufgrund der wirkenden Federkräfte auseinandergedrückt wird, ist ein erster Anschlag 105 und ein zweiter Anschlag 106 vorgesehen. Der erste Anschlag 105 ist dabei an der ersten Tasche 17 gebildet und der zweite Anschlag 106 ist an der zweiten Tasche 18 gebildet. Die Anschläge sind durch Verlängerungen der Taschen ausgebildet und reichen bis kurz hinter die Endbereiche der jeweiligen Wärmeübertragungselemente 11, 12 (vgl. Figur 1). Dadurch kann ein Ausgleichselement 10 bereitgestellt werden, welches keinerlei Verbindungselemente wie Schrauben in Langlöchern oder dgl. benötigt. Die Anschläge 105, 106 begrenzen dabei auch den maximalen Ausgleichsweg, welcher mittels des Ausgleichselements 10 möglich ist.

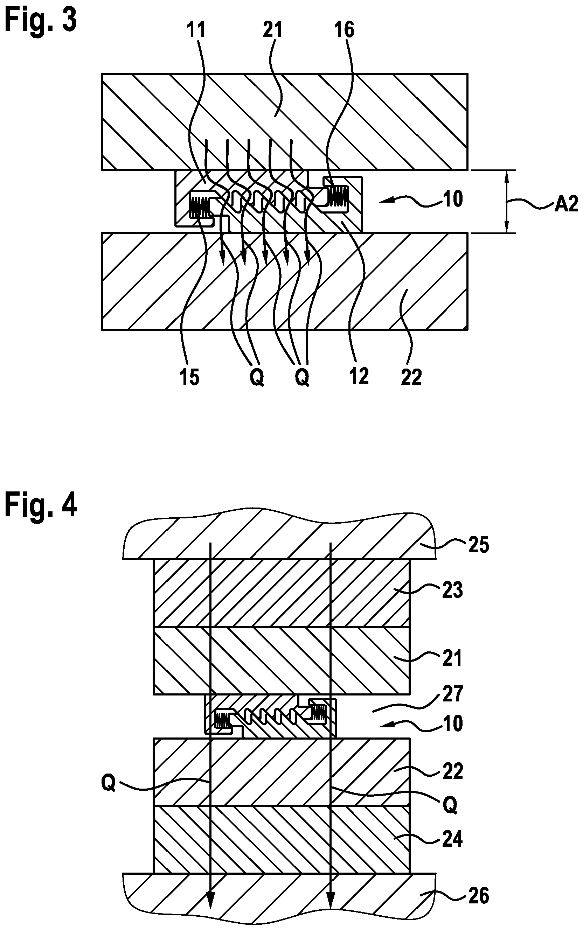

In den Figuren 2 und 3 ist der montierte Zustand des Ausgleichselements 10 dargestellt. Figur 2 zeigt dabei einen Ausgangszustand des Ausgleichselements 10, in welchem noch kein Ausgleich durch eine Verschiebung über die schiefen Ebenen 13, 14 der Wärmeübertragungselemente 11, 12 erfolgt ist. Das Ausgleichselement 10 ist dabei zwischen einem ersten Bauteil 21 und einem zweiten Bauteil 22 angeordnet. Dabei ist die erste Kontaktfläche 101 des ersten Wärmeübertragungselements 11 mit einer Fläche des ersten Bauteils 21 in Kontakt und die dritte Kontaktfläche 103 des zweiten Wärmeübertragungselements 12 mit einer Fläche des zweiten Bauteils 22 in Kontakt. Weiterhin befinden sich die zweite und vierte Kontaktfläche 102 und 104 der beiden Wärmeübertragungselemente miteinander in Kontakt. Ein Abstand zwischen dem ersten Wärmeübertragungselement 11 und dem zweiten Wärmeübertragungselement 12 ist mit A1 bezeichnet.

Figur 3 zeigt einen Zustand, in welchem der ursprüngliche Abstand sich vergrößert hat und nun einen Abstand A2 zwischen dem ersten Bauteil 21 und dem zweiten Bauteil 22 vorhanden ist. Dadurch erfolgt eine Verschiebung des ersten Wärmeübertragungselements 11 relativ zum zweiten Wärmeübertragungselement 12. Trotzdem bleiben die beiden Wärmeübertragungselemente 11, 12 über die schiefen Ebenen 13, 14 miteinander in Kontakt. Dadurch kann immer noch eine Wärmeleitung, in Figur 3 durch die Pfeile Q angedeutet, erreicht werden, so dass eine Entwärmung vom ersten Bauteil 21 zum kühleren Bauteil 22 möglich ist.

Es sei angemerkt, dass die Anzahl der schiefen Ebenen zwischen dem ersten und zweiten Wärmeübertragungselement 11, 12 sowie ein Winkel a, welcher zwischen den schiefen Ebenen und einer Hauptachse X-X vorhanden ist, vorzugsweise in einem Bereich von 30 bis 60° gewählt ist. Als Material wird für die Wärmeübertragungselemente 11, 12 vorzugsweise ein metallisches Material verwendet. Somit kann erfindungsgemäß ein konstanter Wärmestrom Q vom wärmeren ersten Bauteil 21 zum kühleren zweiten Bauteil 22 mittels Wärmeleitung sichergestellt werden.

Figur 4 zeigt ein zweites Ausführungsbeispiel der Erfindung, wobei neben dem ersten und zweiten Bauteil 21, 22 noch ein drittes und viertes Bauteil 23, 24 vorhanden ist. Das erste Bauteil 21 und das dritte Bauteil 23 sind dabei an einem ersten Lager 25 angeordnet und das zweite Bauteil 22 und das vierte Bauteil 24 sind an einem zweiten Lager 26 angeordnet. Somit können auch herstellungsbedingte Toleranzen, welche die Bauteile aufweisen, durch das erfindungsgemäße Ausgleichselement 10, welches im Spalt 27 zwischen den beiden Bauteilgruppen angeordnet ist, ausgeglichen werden. In Figur 4 ist schematisch mittels Pfeilen der Wärmestrom Q vom ersten Lager 25 zum zweiten Lager 26 eingezeichnet.

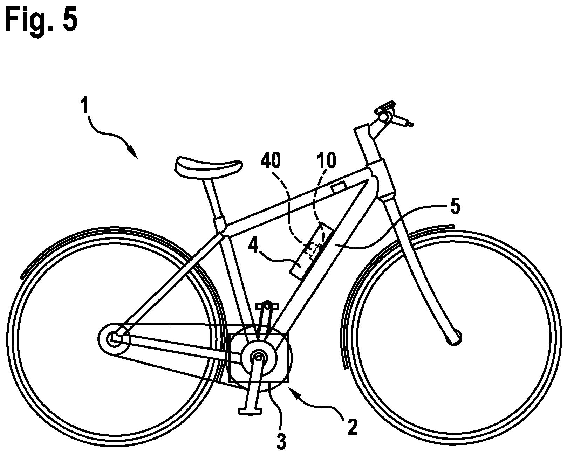

Figur 5 zeigt ein Elektrofahrrad 1, umfassend einen Akku 4 sowie einen elektrischen Antrieb 3 an einem Kurbeltrieb 2, in welchem ein erfindungsgemäßes Ausgleichselement 10 verwendet wird. Das Elektrofahrrad 1 kann mittels Muskelkraft und/oder Motorkraft betrieben werden. Das erfindungsgemäße Ausgleichselement 10 ist dabei zwischen einem Akku 4 und einem Rahmen 5 des Elektrofahrrads angeordnet.

Dabei ist das Ausgleichselement 4 im Bereich eines elektronischen Bauteils 40 des Akkus 4 angeordnet. Somit kann Wärme, welche im Betrieb durch das elektronische Bauteil 40 entsteht, über das Ausgleichselement 10 in den Rahmen 5 übertragen werden. Dadurch kann eine Temperatur des elektronischen Bauteils 10 sowie weiterer Bauteile des Akkus 4 auf einem vorbestimmten, geringen Niveau gehalten werden. Es ist ferner auch möglich, dass Wärme, welche im Betrieb durch Nutzung der Batteriezellen entsteht, über das Ausgleichselement 10 abgeführt werden kann. Hierbei kann entweder die gesamte Kontaktfläche zwischen dem Akku 4 und dem Rahmen 5 mit einem Ausgleichselement 10 versehen werden, um ausreichend Wärme abführen zu können, oder es sind mehrere kleinere Ausgleichselement 10 zwischen Akku 4 und Rahmen 5 vorgesehen. Selbstverständlich ist es auch möglich, dass noch weitere Zwischenbauteile zwischen Akku und Rahmen vorgesehen sind und das erfindungsgemäße Ausgleichselement an einem beliebigen Ort zwischen dem Akku 4 und dem Rahmen 5 angeordnet ist.

## Patentansprüche

1. Wärmeübertragendes Ausgleichselement zur Wärmeübertragung von einem ersten Bauteil auf ein zweites Bauteil, umfassend:
- ein erstes Wärmeleitelement (11) mit einer ersten Kontaktfläche (101), eingerichtet für einen Kontakt mit dem ersten Bauteil, und einer zweiten Kontaktfläche (102),
- ein zweites Wärmeleitelement (12) mit einer dritten Kontaktfläche (103), eingerichtet für einen Kontakt mit dem zweiten Bauteil, und einer vierten Kontaktfläche (104),
- wobei die zweite Kontaktfläche (102) und die vierte Kontaktfläche (104) miteinander in direktem Kontakt stehen, **dadurch gekennzeichnet,**
- **dass** zwischen der zweiten und vierten Kontaktfläche wenigstens eine schiefe Ebene (13, 14) ausgebildet ist, welche in einem Winkel (α) zu einer Hauptachse (X-X) zwischen der ersten Kontaktfläche (101) und der dritten Kontaktfläche (103) ist, und
- **dass** das erste Wärmeelemente (11) und das zweite Wärmeleitelement (12) seitlich ineinander eingeschoben, so dass eine Verschiebung des ersten Wärmeübertragungselement (11) relativ zum zweiten Wärmeübertragungselement (12) erfolgt, während die beiden Wärmeübertragungselemente (11, 12) über die schiefen Ebenen (13, 14) miteinander in Kontakt bleiben.

2. Ausgleichselement nach Anspruch 1, **dadurch gekennzeichnet, dass** die erste Kontaktfläche (101) und die dritte Kontaktfläche (103) zueinander parallel sind.

3. Ausgleichselement nach einem der vorhergehenden Ansprüche, ferner umfassend wenigstens ein Federelement (15, 16), welches zwischen dem ersten Wärmeleitelement (11) und dem zweiten Wärmeleitelement (12) angeordnet ist.

4. Ausgleichselement nach Anspruch 3, **dadurch gekennzeichnet, dass** eine Federkraft des Federelements (15, 16) parallel zur Hauptachse (X-X) gerichtet ist.

5. Ausgleichselement nach Anspruch 3 oder 4, **gekennzeichnet durch** ein zweites Federelement (16), wobei das erste Federelement (15) und das zweite Federelement (16) zwischen dem ersten Wärmeleitelement (11) und dem zweiten Wärmeleitelement (12) angeordnet sind und wobei eine Federkraft des ersten Federelements (15) gegen eine Federkraft des zweiten Federelements (16) gerichtet ist.

6. Ausgleichselement nach Anspruch 5, **dadurch gekennzeichnet, dass** das erste Federelement (15) in einer ersten Tasche (17) des ersten Wärmeleitelements (11) angeordnet ist und zwischen einem ersten Bodenbereich (117) der erste Tasche (17) und einem Endbereich (112) des zweiten Wärmeleitelements (12) angeordnet ist, und dass das zweite Federelement (16) in einer zweiten Tasche (18) des zweiten Wärmeleitelements (12) angeordnet ist und zwischen einem zweiten Bodenbereich (118) der zweiten Tasche (18) und einem Endbereich (111) des ersten Wärmeleitelements (11) angeordnet ist.

7. Ausgleichselement nach einem der vorhergehenden Ansprüche, **dadurch gekennzeichnet, dass** eine geometrische Form des ersten Wärmeleitelements (11) gleich einer geometrischen Form des zweiten Wärmeleitelements (12) ist.

8. Ausgleichselement nach einem der vorhergehenden Ansprüche, **dadurch gekennzeichnet, dass** das erste Wärmeleitelement (11) einen ersten Anschlag (105) umfasst und das zweite Wärmeleitelement (12) einen zweiten Anschlag (106) umfasst, wobei der erste und zweite Anschlag einen Verstellweg des ersten Wärmeleitelements (11) relativ zum zweiten Wärmeleitelement (12) in einer Verstellrichtung, insbesondere senkrecht zur Hauptachse (X-X), begrenzen.

9. Mit Muskelkraft und/oder Motorkraft betreibbares Fahrzeug, insbesondere Elektrofahrrad, umfassend einen Akku (4) und ein wärmeübertragendes Ausgleichselement (10) nach einem der vorhergehenden Ansprüche, wobei das Ausgleichselement (10) eingerichtet ist, Wärme vom Akku (4) abzuführen.

10. Fahrzeug nach Anspruch 9, **dadurch gekennzeichnet, dass** das wärmeübertragende Ausgleichselement (10) unmittelbar am Akku (4) angeordnet ist.

11. Fahrzeug nach Anspruch 9 oder 10, ferner umfassend einen Rahmen (5), wobei der Akku (4) am Rahmen (5) angeordnet ist und wobei das wärmeübertragende Ausgleichselement (10) zwischen dem Akku (4) und dem Rahmen (5) angeordnet ist.

12. Fahrzeug nach einem der Ansprüche 9 bis 11, **dadurch gekennzeichnet, dass** das wärmeübertragende Ausgleichselement (10) an dem Akku (4) an einer Position angeordnet ist, an welcher im Inneren des Akkus (4) ein wärmeabgebendes Element (40), insbesondere eine Elektronik, angeordnet ist.

13. Fahrzeug nach einem der Ansprüche 9 bis 12, **dadurch gekennzeichnet, dass** das wärmeübertragende Ausgleichselement (10) lose zwischen dem Akku (4) und dem Rahmen (5) angeordnet ist.

14. Fahrzeug nach einem der Ansprüche 9 bis 12, **dadurch gekennzeichnet, dass** das wärmeübertragende Ausgleichselement (10) an der ersten Kontaktfläche (101) am Akku (4) fixiert ist.

## Claims

1. Heat-transferring compensating element for heat transfer from a first component to a second component, comprising:
- a first heat-conducting element (11) having a first contact surface (101), configured for contact with the first component, and having a second contact surface (102),
- a second heat-conducting element (12) having a third contact surface (103), configured for contact with the second component, and having a fourth contact surface (104),
- wherein the second contact surface (102) and the fourth contact surface (104) are in direct contact with each other,
**characterized in that**
- at least one oblique plane (13, 14) is formed between the second and fourth contact surfaces, which oblique plane (13, 14) is at an angle (α) to a main axis (X-X) between the first contact surface (101) and the third contact surface (103), and **in that**
- the first heat elements (11) and the second heat-conducting element (12) pushed laterally into each other such that a displacement of the first heat-transferring element (11) relative to the second heat-transferring element (12) takes place while the two heat-transferring elements (11, 12) remain in contact with each other via the oblique planes (13, 14).

2. Compensating element according to Claim 1, **characterized in that** the first contact surface (101) and the third contact surface (103) are parallel to each other.

3. Compensating element according to either of the preceding claims, further comprising at least one spring element (15, 16), which is arranged between the first heat-conducting element (11) and the second heat-conducting element (12).

4. Compensating element according to Claim 3, **characterized in that** a spring force of the spring element (15, 16) is oriented parallel to the main axis (X-X).

5. Compensating element according to Claim 3 or 4, **characterized by** a second spring element (16), wherein the first spring element (15) and the second spring element (16) are arranged between the first heat-conducting element (11) and the second heat-conducting element (12), and wherein a spring force of the first spring element (15) is oriented counter to a spring force of the second spring element (16).

6. Compensating element according to Claim 5, **characterized in that** the first spring element (15) is arranged in a first pocket (17) of the first heat-conducting element (11) and is arranged between a first bottom region (117) of the first pocket (17) and an end region (112) of the second heat-conducting element (12), and **in that** the second spring element (16) is arranged in a second pocket (18) of the second heat-conducting element (12) and is arranged between a second bottom region (118) of the second pocket (18) and an end region (111) of the first heat-conducting element (11) .

7. Compensating element according to one of the preceding claims, **characterized in that** a geometric shape of the first heat-conducting element (11) is identical to a geometric shape of the second heat-conducting element (12).

8. Compensating element according to one of the preceding claims, **characterized in that** the first heat-conducting element (11) comprises a first stop (105) and the second heat-conducting element (12) comprises a second stop (106), wherein the first and second stops limit an adjustment travel of the first heat-conducting element (11) relative to the second heat-conducting element (12) in an adjustment direction, in particular perpendicular to the main axis (X-X).

9. Vehicle operatable by muscle force and/or motor force, in particular an electric bicycle, comprising a battery (4) and a heat-transferring compensating element (10) according to one of the preceding claims, wherein the compensating element (10) is configured to remove heat from the battery (4) .

10. Vehicle according to Claim 9, **characterized in that** the heat-transferring compensating element (10) is arranged directly on the battery (4).

11. Vehicle according to Claim 9 or 10, further comprising a frame (5), wherein the battery (4) is arranged on the frame (5), and wherein the heat-transferring compensating element (10) is arranged between the battery (4) and the frame (5).

12. Vehicle according to one of Clams 9 to 11, **characterized in that** the heat-transferring compensating element (10) is arranged on the battery (4) at a position where a heat-dissipating element (40), in particular an electronics system, is arranged in the interior of the battery (4).

13. Vehicle according to one of Claims 9 to 12, **characterized in that** the heat-transferring compensating element (10) is arranged loosely between the battery (4) and the frame (5).

14. Vehicle according to one of Claims 9 to 12, **characterized in that** the heat-transferring compensating element (10) is fixed on the first contact surface (101) on the battery (4).

## Revendications

1. Élément de compensation à transmission de chaleur destiné à la transmission de chaleur d'un premier composant à un deuxième composant, comprenant :
- un premier élément conducteur de chaleur (11) muni d'une première surface de contact (101), conçue pour un contact avec le premier composant, et d'une deuxième surface de contact (102),
- un deuxième élément conducteur de chaleur (12) muni d'une troisième surface de contact (103), conçue pour un contact avec le deuxième composant, et d'une quatrième surface de contact (104),
- la deuxième surface de contact (102) et la quatrième surface de contact (104) étant en contact direct l'une avec l'autre,
**caractérisé**
- **en ce qu'**entre la deuxième et la quatrième surface de contact est formé au moins un plan en biais (13, 14), lequel est disposé selon un angle (α) par rapport à un axe principal (X-X) entre la première surface de contact (101) et la troisième surface de contact (103), et
- **en ce que** le premier éléments de chaleur (11) et le deuxième élément conducteur de chaleur (12) insérés latéralement l'un dans l'autre, de sorte qu'il se produit un décalage du premier élément de transfert de chaleur (11) par rapport au deuxième élément de transfert de chaleur (12), alors que les deux éléments de transfert de chaleur (11, 12) restent en contact l'un avec l'autre par le biais des plans en biais (13, 14) .

2. Élément de compensation selon la revendication 1, **caractérisé en ce que** la première surface de contact (101) et la troisième surface de contact (103) sont parallèles l'une à l'autre.

3. Élément de compensation selon l'une des revendications précédentes, comportant en outre au moins un élément ressort (15, 16) qui est disposé entre le premier élément conducteur de chaleur (11) et le deuxième élément conducteur de chaleur (12).

4. Élément de compensation selon la revendication 3, **caractérisé en ce qu'**une force de ressort de l'élément ressort (15, 16) est orientée parallèlement à l'axe principal (X-X).

5. Élément de compensation selon la revendication 3 ou 4, **caractérisé par** un deuxième élément ressort (16), le premier élément ressort (15) et le deuxième élément ressort (16) étant disposés entre le premier élément conducteur de chaleur (11) et le deuxième élément conducteur de chaleur (12) et une force de ressort du premier élément ressort (15) étant orientée contre une force de ressort du deuxième élément ressort (16).

6. Élément de compensation selon la revendication 5, **caractérisé en ce que** le premier élément ressort (15) est disposé dans une première poche (17) du premier élément conducteur de chaleur (11) et disposé entre une première zone de fond (117) de la première poche (17) et une zone d'extrémité (112) du deuxième élément conducteur de chaleur (12), et en ce le deuxième élément ressort (16) est disposé dans une deuxième poche (18) du deuxième élément conducteur de chaleur (12) et disposé entre une deuxième zone de fond (118) de la deuxième poche (18) et une zone d'extrémité (111) du premier élément conducteur de chaleur (11).

7. Élément de compensation selon l'une des revendications précédentes, **caractérisé en ce qu'**une forme géométrique du premier élément conducteur de chaleur (11) est identique à une forme géométrique du deuxième élément conducteur de chaleur (12).

8. Élément de compensation selon l'une des revendications précédentes, **caractérisé en ce que** le premier élément conducteur de chaleur (11) comporte une première butée (105) et le deuxième élément conducteur de chaleur (12) comporte une deuxième butée (106), la première et la deuxième butée délimitant une course de positionnement du premier élément conducteur de chaleur (11) par rapport au deuxième élément conducteur de chaleur (12) dans une direction de positionnement, notamment perpendiculaire à l'axe principal (X-X).

9. Véhicule pouvant être propulsé à la force musculaire et/ou à la force d'un moteur, notamment bicyclette électrique, comprenant un accumulateur (4) et un élément de compensation (10) à transmission de chaleur selon l'une des revendications précédentes, l'élément de compensation (10) étant conçu pour évacuer la chaleur de l'accumulateur (4).

10. Véhicule selon la revendication 9, **caractérisé en ce que** l'élément de compensation (10) à transmission de chaleur est disposé directement sur l'accumulateur (4) .

11. Véhicule selon la revendication 9 ou 10, comportant en outre un cadre (5), l'accumulateur (4) étant monté sur le cadre (5) et l'élément de compensation (10) à transmission de chaleur étant disposé entre l'accumulateur (4) et le cadre (5).

12. Véhicule selon l'une des revendications 9 à 11, **caractérisé en ce que** l'élément de compensation (10) à transmission de chaleur est disposé sur l'accumulateur (4) à une position à laquelle un élément diffusant de la chaleur (40), notamment une électronique, est disposé à l'intérieur de l'accumulateur (4).

13. Véhicule selon l'une des revendications 9 à 12, **caractérisé en ce que** l'élément de compensation (10) à transmission de chaleur est disposé détaché entre l'accumulateur (4) et le cadre (5).

14. Véhicule selon l'une des revendications 9 à 12, **caractérisé en ce que** l'élément de compensation (10) à transmission de chaleur est fixé au niveau de la première surface de contact (101) sur l'accumulateur (4) .
